(19) Europäisches Patentamt
European Patent Office
Office européen des brevets

(11) Publication number: 0 358 395 A2

(12) # EUROPEAN PATENT APPLICATION

(21) Application number: 89308706.4

(22) Date of filing: 29.08.89

(51) Int. Cl.5: C08J 5/24 , C08J 5/04 , //C08G73/10

(30) Priority: 30.08.88 JP 213731/88

(43) Date of publication of application: 14.03.90 Bulletin 90/11

(84) Designated Contracting States: DE FR GB IT

(71) Applicant: UBE INDUSTRIES, LTD.
12-32, Nishihonmachi 1-chome
Ube-shi, Yamaguchi-ken 755(JP)

(72) Inventor: Yamamoto, Shinji Ube Ind., Ltd.
Hirakata Kenkyusho, 3-10 Nakamiyatitamachi
Hirakata-shi Osaka(JP)
Inventor: Tanaka, Hideho Ube Ind., Ltd.
Hirakata Kenkyusho, 3-10 Nakamiyatitamachi
Hirakata-shi Osaka(JP)
Inventor: Nishimura, Kazuo Ube Ind., Ltd.
Hirakata Kenkyusho, 3-10 Nakamiyatitamachi
Hirakata-shi Osaka(JP)
Inventor: Okamoto, Kazuhiko Ube Ind., Ltd.
Hirakata Kenkyusho, 3-10 Nakamiyatitamachi
Hirakata-shi Osaka(JP)

(74) Representative: Atkinson, Peter Birch et al
MARKS & CLERK Suite 301 Sunlight House
Quay Street
Manchester M3 3JY(GB)

(54) **Aromatic imide polymer fiber-reinforced prepreg and cured resinous laminate material derived from same.**

(57) An aromatic imide polymer fiber-reinforced prepreg useful for a cured resinous laminate material having not only satisfactory mechanical properties and heat resistance but also an excellent machinability, comprising a thermo-setting resin and a reinforcing aromatic imide polymer fiber material impregnated with the thermo-setting resin, which imide polymer comprises 50 to 100 molar% of a biphenyl imide recurring units and 0 to 50 molar% non-biphenyl imide recurring units.

EP 0 358 395 A2

# AROMATIC IMIDE POLYMER FIBER-REINFORCED PREPREG AND CURED RESINOUS LAMINATE MATERIAL DERIVED FROM SAME

## BACKGROUND OF THE INVENTION

### 1. Field of the Invention

The present invention relates to an aromatic imide polymer fiber-reinforced prepreg and a cured resinous laminate material derived from the same.

More particularly, the present invention relates to a prepreg comprising a reinforcing aromatic imide polymer fiber material having a high heat resistance and excellent mechanical properties, and impregnated with a thermo-setting resin, and a cured resinous laminate material produced from a plurality of the prepregs and having a high tensile strength, modulus of elasticity, heat resistance, and machinability.

### 2. Description of the Related Art

It is known that conventional fiber-reinforced prepregs comprising a thermo-setting resin and a reinforcing material comprising a number of aromatic polyamide fibers and impregnated with the thermo-setting resin, are useful for producing fiber-reinforced cured laminate materials having a high tensile strength, modulus of elasticity, and heat resistance and useful for various materials for sport, leisure and industrial uses, and as secondary structure-forming material for aircraft.

It is also known that the conventional aromatic polyamide fibers have a high crystalline structure in which a number of microfibrils having a high degree of crystallinity are arranged in a high degree of orientation, and thus are easily fibrillated when compression buckled. Therefore, when an aromatic polyamide fiber-reinforced, cured resinous laminate material is machined, for example, by a cutting, punching or grinding process, the aromatic polyamide fibers are fibrillated and the processed face of the laminate material is broken by the compression force, finely split or fluffed, and the resultant product exhibits an unsatisfactory appearance and quality. Accordingly, for the machining of the aromatic polyamide fiber-reinforced, cured resinous laminate material, a special processing machine or device and process or method are necessary, to avoid the above-mentioned disadvantages. Namely, the conventional aromatic polyamide fibers are not always satisfactory as reinforcing fibers for practical prepreg products.

In the above circumstances, there is a strong desire by the industry for fiber-reinforced prepregs which can form a cured resinous laminate material having an excellent machinability, superior mechanical properties, and a high heat resistance.

## SUMMARY OF THE INVENTION

An object of the present invention is to provide an aromatic imide polymer fiber-reinforced prepreg capable of forming a cured resinous laminate material having a high machinability at a high efficiency and free from fibrillation of the reinforcing fibers when machined, and a cured resinous laminate material derived from a plurality of the above-mentioned prepregs.

Another object of the present invention is to provide an aromatic imide polymer fiber-reinforced prepreg capable of forming a cured resinous laminate material having a relatively small weight and exhibiting an excellent mechanical strength and modulus of elasticity, and a satisfactory heat resistance, and a cured resinous laminate material produced from a plurality of the prepregs.

The above-mentioned objects can be obtained by the aromatic imide polymer fiber-reinforced prepreg comprising: a matrix comprising a thermo-setting resin; and a reinforcing material impregnated with the thermo-setting resin matrix and comprising aromatic imide polymer fibers which comprise at least one aromatic imide polymer having 50 to 100 molar% of at least one type of biphenyl imide recurring units of the formula (I):

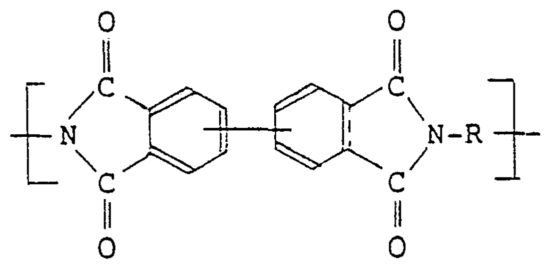

(I)

wherein R represents a divalent aromatic radical, and 0 to 50 molar% of at least one type of non-biphenyl imide recurring units.

Also, the aromatic imide polymer fiber-reinforced resinous laminate material of the present invention comprises a plurality of cured prepregs bonded to each other and each comprising: a matrix comprising a cured thermo-setting resin; and a reinforcing material impregnated with the cured thermo-setting resin matrix, and comprising aromatic imide polymer fibers which comprise at least one aromatic imide polymer having 50 to 100 molar% of at least one type of biphenyl-type imide recurring units of the formula (I):

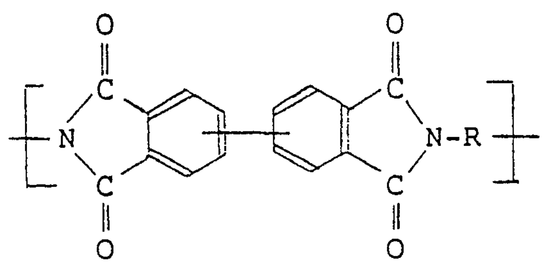

(I)

wherein R represents a divalent aromatic radical, and 0 to 50 molar% of at least one type of non-biphenyl imide recurring units.

## DESCRIPTION OF THE PREFERRED EMBODIMENTS

The prepreg of the present invention comprises a matrix comprising a thermo-setting resin and a reinforcing material comprising a number of aromatic imide polymer fibers or filaments and impregnated with the thermo-setting resin matrix.

The aromatic imide polymers fibers usable for the present invention comprise at least one aromatic imide polymer having 50 to 100 molar%, preferably 60 to 100, more preferably 80 to 100 molar%, of at least one type of biphenyl imide recurring units of the formula (I):

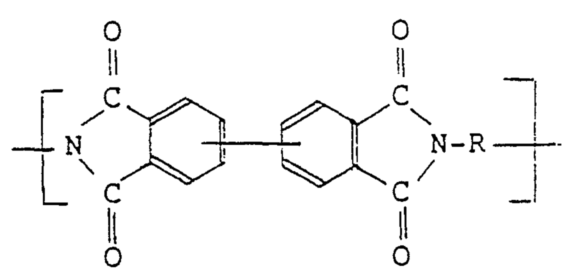

(I)

wherein R represents a divalent aromatic radical, which is a residue of an aromatic diamine and exclusive from two amino radicals, and 0 to 50 molar%, preferably 0 to 40 molar%, more preferably 0 to 20 molar%, of at least one type of non-biphenyl imide recurring units.

The above-mentioned aromatic imide polymer usable for the present invention can be prepared by a polymerization-imidization of an aromatic tetracarboxylic acid component comprising 50 to 100 molar%, preferably 60 to 100 molar%, more preferably 80 to 100 molar%, of at least one biphenyltetracarboxylic

acid compound, and 0 to 50 molar%, preferably 0 to 40 molar%, more preferably 0 to 20 molar%, of at least one non-biphenyl aromatic tetracarboxylic acid compound, with an aromatic diamine component.

The biphenyl tetracarboxylic acid compounds include 3,3′,4,4′-biphenyl tetracarboxylic acid, 2,3,3′,4′-biphenyl tetracarboxylic acid and dianhydrides, esters (preferably lower alkylesters) and salts of the above-mentioned acid.

The non-biphenyl aromatic tetracarboxylic acid compound is preferably selected from pyromellitic acid, and benzophenonetetracarboxylic acid, and dianhydrides, esters, and salts of the above-mentioned acids.

The aromatic diamine component preferably comprises 60 to 100 molar%, more preferably 80 to 100 molar%, of at least one aromatic diamine having a plurality of benzene ring structures, and 0 to 40 molar%, more preferably, 0 to 20 molar%, of at least one member selected from monophenyl diamines and diamino-heterocyclic compounds.

The aromatic diamine having two or more benzene ring structures is preferably selected from the group consisting of diamino-diphenyl compounds, for example, 4,4′-diaminodiphenylether, 3,4′-diamino-diphenylether, 3,3′-dimethyl-4,4′-diaminodiphenyl-ether, and 3,3′-dimethoxy-4,4′-diaminodiphenylether; diaminodiphenylthioether compounds, for example, 4,4′-diaminodiphenylthioether, 3,4′-diamino-diphenylthioether, 3,3′-dimethyl-4,4′-diamino-diphenylthioether, and 3,3′-dimethoxy-4,4′-diamino-diphenylthioether; diaminodiphenylsulfone compounds, for example, 4,4′-diaminodiphenyl-sulfone and 3,4′-diaminodiphenylsulfone; diamino-benzophenone compounds, for example, 4,4′-diamino-benzophenone, 3,3′-dimethyl-4,4′-diaminobenzophenone, and 3,4′-diaminobenzophenone; diamino-diphenylmethane compounds, for example, 4,4′-diaminodiphenylmethane, 3,3′-dimethyl-4,4′-diaminodiphenylmethane, 3,4′-diaminodiphenylmethane; diaminodiphenylpropane compounds, for example, 2,2-bis(4-aminophenyl)propane, and 2,2-bis(3-aminophenyl)propane; diamino-biphenyl compounds, for example, 3,3′-dimethylbenzidine (O-tolidine), 3,3′diethylbenzidine, 3,3′-dimethoxybenzidine (O-dianisidine) and 3,3′-diaminobiphenyl; and diaminodiphenylsulfoxide compounds, for example, 4,4′-diaminodiphenylsulfoxide.

The monophenyl amine and diamino-hetero-cyclic compounds are preferably selected from o-, m-and p-phenylene diamine, 2,6-diamino-pyridine, 3,6-diaminopyridine, 2,5-diamino-pyridine, and 3,4-diaminopyridine.

In preferable aromatic imide polymer fibers usable for the present invention, the aromatic imide polymer comprises the biphenyl imide recurring units of the formula (I) derived from polymerization-imidization reaction of a biphenyltetracarboxylic acid component consisting of at least one member selected from the group consisting of 3,3′,4,4′- and 2,3,3′,4′-biphenyl tetracarboxylic acids, and dianhydrides, esters and salts of the acids, with an aromatic diamine component consisting of at least one member selected from the group consisting of 4,4′-diaminodiphenylether, 4,4′-diaminodiphenyl thioether, 4,4′-diaminodiphenylmethane, 3,3′-dimethoxybenzidine and 3,3′-dimethylbenzidine.

In the preparation of the aromatic imide polymer, preferably, the aromatic tetracarboxylic acid component reacts with the aromatic diamine component, substantially in the absence of air and water, in an organic polar solvent.

The organic polar solvent preferably comprises at least one member selected from phenolic solvents, for example, p-chlorophenol, phenol, m-cresol, p-cresol, and 2,4-dichloro phenol. These can be used in the form of a mixture of two or more thereof.

The polymerization-imidization reaction is carried out preferably at a temperature of 150°C to 250°C. To provide the reinforcing fibers of the present invention having a high mechanical strength, the aromatic imide polymer preferably has a large molecular weight, for example, corresponding to a logarithmic viscosity number of 1.5 or more, more preferably 2.0 to 5.0, determined in a concentration of 0.5 g/100 ml in a solvent consisting of a 99 to 100% by weight concentrated sulfuric acid at a temperature of 30°C.

The aromatic imide polymer fibers or filaments usable for the present invention can be prepared by a fiber-producing method disclosed in, for example, Japanese Unexamined Patent Publication No. 56-159314 or U.S. Patent No. 4370290 and Japanese Unexamined Patent Publication Nos. 60-65112 and 60-215812.

In the preparation of the aromatic imide polymer fibers or filaments, a spinning dope solution is prepared from an aromatic imide polymer dissolved in an organic polar solvent, and is converted to a number of undrawn filaments by a conventional dry-spinning method or wet-spinning method. The undrawn filaments are drawn at a predetermined temperature and at a predetermined draw ratio.

In the preparation of the aromatic imide polymer, the organic solvent to be used for the spinning dope solution may be the same as that used for the polymerization-imidization reaction, and thus, a polymerization-imidization product in which the resultant aromatic imide polymer is dissolved in the organic solvent can be used as the spinning dope solution. If necessary, the concentration of the polymer or the viscosity of the polymer solution is controlled to a specific value, before using same as the spinning dope solution.

In the wet-spinning method, the spinning dope solution is extruded through a number of spinning holes; the resultant filamentary streams of the dope solution are introduced into a coagulating bath containing a coagulating medium compatible with the organic solvent in the dope solution, to form a number of undrawn filaments; and the undrawn filaments are dried in a drying oven, heat-treated in, for example, an electric furnace, and then drawn at a predetermined temperature and draw ratio.

The coagulating medium must be compatible with the organic solvent in the dope solution but substantially not capable of dissolving the aromatic imide polymer therein, and comprise at least one member selected from methyl alcohol, ethyl alcohol, mixtures of methyl alcohol with water, and mixtures of ethyl alcohol with water.

The aromatic imide polymer fibers usable for the present invention preferably have a high initial modulus of elasticity of, for example, 10 to 15 ton/$mm^2$, and a high tensile strength of, for example, 200 to 330 kg/$mm^2$.

Also, the aromatic imide polymer fibers are preferably in the form of short fibers having a thickness (or diameter) of 5 to 100 $\mu$m, more preferably 10 to 50 $\mu$m and a length of 0.1 to 100 mm, more preferably 1 to 50 mm, or in the form of multifilaments having a thickness of 5 to 100 $\mu$m.

The reinforcing material comprising the aromatic imide polymer fibers can be in any form usable for reinforcing the prepreg, but preferably the reinforcing material is in the form of a plurality of multifilament yarns arranged in parallel to each other, or a woven fabric, for example, plain weave fabric, twill fabric, satin fabric or other multi-axial weave fabric. Alternatively, the reinforcing material is in the form of a mat or sheet consisting of bundled fibers partially adhered to each other with an adhesive agent. The mat has a thickness of 0.5 to 5 mm, and the sheet has a thickness of 0.05 to 0.5 mm.

Preferably, the prepreg of the present invention contains, as a reinforcing material, a number of aromatic imide polymer multifilament yarns arranged in parallel to each other, or a woven fabric comprising aromatic imide polymer fiber yarns.

In the prepreg of the present invention, the reinforcing material comprising the aromatic imide polymer fibers is impregnated with a thermo-setting resin matrix.

The thermo-setting resin comprises at least one member selected from, for example, epoxy resins, unsaturated polyester resins, phenol compound-formaldehyde resins, bismaleimide resins, thermo-setting aromatic imide polymer resins (terminal-modified aromatic imide oligomers), cyanate resins, and quinoxaline resins.

The prepreg of the present invention can be prepared by any conventional prepreg-preparing method. For example, in a wet (or solution) method, a thermo-setting resin is dissolved in a solvent, a reinforcing material is impregnated with the resultant solution, and the solvent is then removed from the prepreg. Alternatively, in a dry (or hot melt) method, the thermo-setting resin is heated until molten, and the reinforcing material is impregnated with the molten thermo-setting resin.

In the wet (solution) method, the solvent for the thermo-setting resin can be selected from a wide range of liquid compounds, including low boiling point compounds, for example, acetone, methyl-ethyl ketone, and $\beta$-oxyethylmethylether (methyl cellosolve), and high boiling point compounds, for example, dimethyl acetamide N-methyl-2-pyrrolidone. In the solution, the concentration of the thermo-setting resin is preferably from 10% to 50% by weight, more preferably from 20% to 40% by weight.

In the dry (hot melt) method, for example, at least one dry film consisting of a thermo-setting resin is combined with (for example, superimposed on) a reinforcing material, and the resultant precursory prepreg is heated at a temperature of, for example, 50°C to 150°C to melt the dry film of the thermo-setting resin and impregnate the reinforcing material with the molten thermo-setting resin.

Preferably, the prepreg of the present invention contains a reinforcing material comprising the aromatic imide polymer fibers in a content of 40% to 70% by weight, more preferably 45% to 65% by weight.

Also, the prepreg of the present invention preferably has a thickness of 20 to 300 $\mu$m, more preferably 50 to 200 $\mu$m.

The cured laminate material of the present invention can be produced by laminating a plurality of the prepregs and bonding the laminated prepregs together by a curing process, which also thermally cures the thermo-setting resin.

The plurality of prepregs are superimposed one on the other an autoclave-forming method, press-forming method, sheet-winding forming method or sheet-wrapping forming method, and the resultant precursory laminate material is cured. The forming method, curing method and curing conditions are determined in accordance with the type of thermo-setting resin, the type and form of reinforcing material and the use of the resultant prepreg.

The cured laminate material may be further subjected to a post-curing treatment.

EXAMPLES

The present invention will be further explained by way of specific examples, which are representative and do not restrict the scope of the present invention in any way.

In the examples, the following tests were carried out.

(a) Tensile strength of filament yarn Japanese Industrial Standard (JIS) L 1017

(b) Content of volatile substance in thermo-setting resin in prepreg ASTM C 613

(c) Content of fibers in laminate material:
ASTM D 3171

(d) Specific gravity of laminate material:
ASTM D 792

(e) Compressive properties of laminate material:
ASTM D 695

(f) Flexural properties of laminate material:
ASTM D 790

(g) Interlaminar shearing strength of laminate material:
ASTM D 2344

(h) Machinability of laminate material

(1) Cutting workability

A laminate material test piece was cut by a diamond saw, the ease or difficulty of the cutting operation was organoleptically evaluated, and the resultant cut face was observed by the naked eye.

(2) Punching workability

A laminate material test piece was punched by a punch, the ease or difficulty of the punching operation was organoleptically evaluated, and the punched face was observed by the naked eye.

(3) Grinding workability

A grinding test in accordance with JIS K 7204 was applied to a laminate material test piece, and the ground face was observed by a scanning electron microscope.

Example 1

A mixture of 7 molar parts of 3,3′,4,4′-biphenyltetracarboxylic dianhydride, 3 molar parts of pyromellitic dianhydride, and 10 molar parts of o-tolidine was dissolved in a solvent consisting of p-chlorophenol and the resultant reaction mixture was subjected to a polymerization-imidization procedure at a temperature of 195 °C for 5 hours while stirring. The resultant reaction mixture was added to acetone to allow the resultant aromatic imide polymer to deposit from the mixture, and the deposited product was collected and dried. The dried aromatic imide polymer was in the form of fine particles and exhibited a logarithmic viscosity number of 5.26.

The aromatic imide polymer was dissolved in a concentration of 4% by weight in a solvent consisting of p-chlorophenol to prepare a spinning dope solution.

The dope solution was converted to drawn aromatic imide polymer filaments having a diameter of 13 µm and a specific gravity of 1.35 by a wet spinning operation in which a coagulating both consisting of ethyl alcohol was used, and by a heat-drawing operation at a temperature of 450 °C and a draw ratio of 3.3.

The resultant 300 filaments were bundled to form an aromatic imide polymer multifilament yarn.

The yarn exhibited a tensile strength of 297 $kg/mm^2$, a tensile modulus of elasticity of 13.6 $ton/mm^2$, and an ultimate elongation of 2.3%.

A thermo-setting resin was prepared by evenly mixing 100 parts by weight of a bisphenol type epoxy resin (available under a trademark of Epoxy Resin XB 2879A, from Ciba Geigy Co.), and 20 parts by weight of a dicyandiamide curing agent (available under a trademark Curing Agent XB 2879 B, from Ciba Geigy

Co.). The mixture was dissolved in a concentration of 35% by weight in a solvent consisting of a mixture of methyl cellosolve and acetone in a mixing weight ratio of 1:1.

The aromatic imide polymer multifilament yarns were impregnated with the solution of thermo-setting resin, arranged in parallel to each other, wound around a drum winder in one direction, and heat-treated at a temperature of 100 °C for 40 minutes in a hot air-circulating oven.

The resultant prepreg had a thickness of 150 µm and consisted of the parallel-arranged aromatic imide polymer multifilament yarns impregnated with a partially cured thermo-setting resin.

The prepreg contained 40% by weight of the thermo-setting resin and had a content of a volatile substance of 1.4% by weight.

Twelve of the prepregs were superimposed on each other, and the resultant precursory laminate material was heat-pressed at a temperature of 130 °C, under a pressure of 11 kg/cm$^2$, for 90 minutes.

The test results of the resultant cured laminate material are shown in Table 1.

## Comparative Example 1

The same procedures as in Example 1 were carried out except that the aromatic imide polymer filament yarns were replaced by aromatic polyamide filament yarns (available under a trademark of Kevlar #49, from Du Pont, diameter = 12 µm, specific gravity = 1.44) consisting of 267 filaments and having a tensile strength of 280 kg/mm$^2$, a tensile modulus of elasticity of 13.4 ton/mm$^2$, and an ultimate elongation of 2.4%, and the thermo-setting resin solution contained 20% by weight of the thermo-setting resin (the mixture of the epoxy resin and the curing agent).

The thermo-setting resin (epoxy resin) impregnated in the aromatic polyamide filament yarns around the drum winder was heat-treated for 30 minutes at a temperature of 100 °C in a hot air-calculating oven.

The resultant prepreg had a thickness of 100 µm, contained 38% by weight of the partially cured thermo-setting resin, and 1.3% by weight of a volatile substance.

The cured laminate material consisting of 20 prepregs exhibited the test results as shown in Table 1.

Table 1

| Item | | Example No. Example 1 | Comparative Example 1 |
|---|---|---|---|
| Content of reinforcing fibers in laminate material (% by volume) | | 61.5 | 60.5 |
| Specific gravity of laminate material | | 1.31 | 1.36 |
| Compressive strength ($kg/mm^2$) | | 26.0 | 26.5 |
| Compressive modulus of elasticity ($t/mm^2$) | | 4.8 | 5.0 |
| Flexural strength ($kg/mm^2$) | | 65.0 | 64.0 |
| Flexural modulus of elasticity ($t/mm^2$) | | 6.5 | 6.4 |
| Interlaminar shear strength ($kg/mm^2$) | | 7.0 | 7.7 |
| Machinability | Cutting workability | good | Bad *1 |
| | Punching workability | good | Bad *2 |
| | Grinding workability | good | Bad *3 |

Note: *1 ... The cut face of the test piece was finely split and a smooth cut face was not obtained.

*2 ... The test piece could not be completely punched, i.e., penetration by the punch was insufficient.

*3 ... The portion of the aromatic polyamide fibers exposed on the ground face of the test piece were

fibrillated, and thus the ground face had a rough surface.

Table 1 clearly indicates that the prepreg of the present invention had a relatively small specific gravity even when the content of the reinforcing fibers was relatively large. Also, Table 1 shows that the cured laminate material of the present invention had a satisfactory mechanical strength and modulus of elasticity, and an excellent machinability, whereas the comparative cured laminate material containing, as reinforcing fibers, the aromatic polyamide fibers, exhibited a very poor machinability.

**Claims**

1. An aromatic imide polymer fiber-reinforced prepreg, comprising:
and a matrix comprising a thermo-setting resin;
a reinforcing material impregnated with the thermo-setting resin matrix and comprising aromatic imide polymer fibers which comprise at least one aromatic imide polymer having 50 to 100 molar% of at least one type of biphenyl imide recurring units of the formula (I):

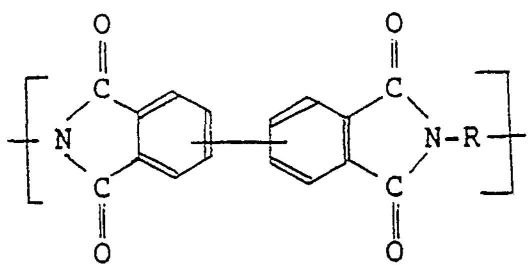

(I)

wherein R represents a divalent aromatic radical, and 0 to 50 molar% of at least one type of non-biphenyl imide recurring units.

2. The prepreg as claimed in claim 1, wherein the aromatic imide polymer fibers have a thickness (or diameter) of 5 to 100 µm.

3. The prepreg as claimed in claim 1, wherein the reinforcing material is in the form of a plurality of milti-filament yarns arranged in parallel to each other, a woven fabric, or a mat or sheet consisting of a number of bundled fibers adhered to each other with an adhesive agent.

4. The prepreg as claimed in claim 1, wherein the thermo-setting resin comprises at least one member selected from the group consisting of epoxy resins, unsaturated polyester resins, phenol compound-formaldehyde resins, bismaleimide resins, thermo-setting aromatic imide polymer resins, cyanate resins and quinoxaline resins.

5. The prepreg as claimed in claim 1, wherein the content of the reinforcing material is from 40 to 70% by weight.

6. The prepreg as claimed in claim 1, which has a thickness of 20 to 300 µm.

7. The prepreg as claimed in claim 1, wherein the biphenyl imide recurring units are derived from polymerization-imidization reaction of a biphenyltetracarboxylic acid component consisting of at least one member selected from the group consisting of 3,3′,4,4′-and 2,3,3′,4′-biphenyltetracarboxylic acids, and dianhydrides, esters and salts of the acids, with an aromatic diamine component consisting of at least one member selected from the group consisting of 4,4′-diaminodiphenylether, 4,4′-diaminodiphenyl thioether, 4,4′-diaminodiphenylmethane, 3,3′-dimethoxybenzidine and 3,3′-dimethylbenzidine.

8. The prepregs as claimed in claim 1, wherein the non-biphenyl imide recurring units are derived from polymerization-imidization reaction of a non-biphenyl type aromatic tetracarboxylic acid component consisting of at least one member selected from the group consisting of pyromellitic acid and benzophenonetetracarboxyl acids and dianhydrides, esters and salts of the acids, with a diamine component comprising at least one aromatic diamine.

9. The prepreg as claimed in claim 1, wherein the aromatic imide polymer has a logarithmic viscosity

number of 1.5 or more, determined in a concentration of 0.5g/100 ml in a solvent consisting of a 99 to 100% by weight sulfuric acid at a temperature of 30 °C.

10. The prepreg as claimed in claim 1, wherein the aromatic imide polymer fibers have an initial modulus of elasticity of 10 to 15 ton/mm$^2$ and a tensile strength of 200 to 330 kg/mm$^2$.

11. An aromatic imide polymer fiber-reinforced resinous laminate material comprising a plurality of cured prepregs bonded to each other and each comprising:
a matrix comprising a cured thermo-setting resin; and
a reinforcing material impregnated with the cured thermo-setting resin matrix, and comprising aromatic imide polymer fibers which comprises at least one aromatic imide polymer having 50 to 100 molar% of at least one type of biphenyl-type imide recurring units of the formula (I):

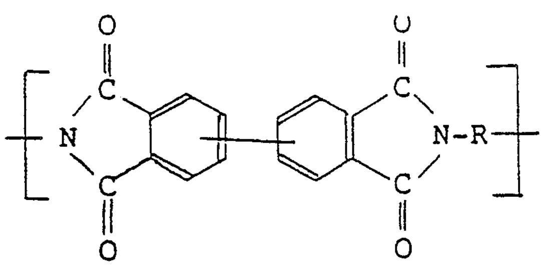

(I)

wherein R represents a divalent aromatic radical, and 0 to 50 molar% of at least one type of non-biphenyl imide recurring units.